# FASCICULE DE BREVET EUROPEEN

(11) **EP 0 603 068 B1**
(45) Date de publication et mention de la délivrance du brevet: **01.07.1998**
(21) Numéro de dépôt: 93403035.4
(22) Date de dépôt: 15.12.1993
(51) Int. Cl.: C08G 12/40

(54) **Agent de durcissement latent pour résines aminoplastes d'imprégnation et mélanges d'imprégnation correspondants**
Latenter Härter für Aminoplasttränkharze und dieses enthaltende Mischungen
Latent curing agent for aminoplast impregnation resins and blends containing the same

(30) Priorité: 17.12.1992 FR 9215251
(43) Date de publication de la demande: 22.06.1994
(73) Titulaire: ELF ATOCHEM S.A., 92800 Puteaux, Hauts-de-Seine (FR)
(72) Inventeur: Lalo, Jack, F-31400 Toulouse (FR); Loussayre, Frédéric, F-31240 l'Union (FR); Garrique, Roger, F-31000 Toulouse (FR)
(74) Mandataire: Chaillot, Geneviève

(56) Documents cités:
- EP-A- 0 000 780
- EP-A- 0 074 519
- US-A- 2 223 817
- US-A- 3 565 622

## Description

La présente invention porte sur des agents de durcissement à action latente, destinés à être incorporés à des résines aminoplastes thermodurcissables d'imprégnation. L'invention porte également sur des mélanges d'imprégnation et de liaison à base de ces résines aminoplastes thermodurcissables, auxquels ont été incorporés ces agents de durcissement.

Les résines aminoplastes mises en jeu dans la présente invention sont constituées par des condensats mélamine-formaldéhyde et des condensats urée-formaldéhyde, et elles se présentent généralement sous forme de solutions aqueuses de ces condensats, condensés jusqu'à être insolubles ou presque insolubles dans l'eau, ou bien de ces condensats totalement ou partiellement éthérifiés, c'est-à-dire rendus solubles dans l'eau, l'utilisation de solvants autres que l'eau étant également possible. Les solutions de ces résines aminoplastes, ou les bains qui sont préparés à partir de ces solutions, servent à l'imprégnation de matériaux supports absorbants, tels que le papier, les mats de fibres ou les tissus ; après leur séchage, les matériaux imprégnés peuvent être transformés en stratifiés par une compression à chaud ou utilisés pour le revêtement de surface de matériaux, tels que les panneaux lignosulfoniques ou pour la fabrication de stratifiés.

Les agents de durcissement à action latente incorporés dans les mélanges d'imprégnation à base de résines aminoplastes, destinés notamment au surfaçage, doivent, après avoir été ajoutés aux résines, laisser des temps de mise en oeuvre suffisants à la température ambiante et, en même temps, permettre d'atteindre des temps de durcissement extrêmement courts aux températures de mise en oeuvre, c'est-à-dire à des températures de l'ordre de 100 à 200°C. Par ailleurs, ils doivent satisfaire les exigences suivantes compte tenu de la particularité de cette application :
- ils doivent manifester peu d'action à la température ambiante ;
- l'action d'accélération ne doit pas s'opposer totalement à un bon étalement plastique de la résine lors de la mise en oeuvre (fluage) ;
- ils ne doivent pas présenter d'effet défavorable sur les propriétés du produit fini, en particulier en ce qui concerne l'aspect de surface et la dureté ; et
- ils doivent être compatibles avec les résines, c'est-à-dire être solubles et facilement dispersables dans les solutions ou bains de résines, dans les conditions habituelles d'utilisation.

Par le brevet européen EP-B-0 000 780, on connaît, comme agents de durcissement pour résines aminoplastes d'imprégnation, des solutions aqueuses de sels de l'acide sulfureux et d'alcanol amines aliphatiques et cycloaliphatiques, primaires, secondaires et tertiaires, en particulier en C₁-C₁₀, ou de sels de l'acide sulfureux et de morpholine, le rapport molaire de l'alcanol amine ou de la morpholine à l'acide sulfureux étant notamment compris entre 1:0,5 et 1:1. Dans la description de ce brevet européen, est mentionné, comme agent de durcissement latent appartenant à l'état antérieur de la technique, ne répondant donc pas aux spécifications pour les résines aminoplastes d'imprégnation, le sel molaire de l'éthylène diamine et de l'acide sulfureux. Il est indiqué, à propos de ce sulfite, décrit dans le brevet américain US-A-2 223 817 comme additif à une composition de moulage urée-formaldéhyde, qu'il est peu soluble dans l'eau et qu'il ne peut être dispersé de manière homogène dans des solutions aqueuses de résines aminoplastes, et également qu'il ne possède pas un effet de durcissement uniforme dans l'application en tant que durcisseur pour résines d'imprégnation.

On connaît également, par le brevet européen EP-B-74 519, l'utilisation du sulfite d'ammonium comme durcisseur à ajouter à des solutions aqueuses de résines de mélamine pour l'imprégnation.

La Société déposante a maintenant découvert que, d'une manière tout à fait contraire aux indications données dans le brevet européen EP-B-0 000 780, il est non seulement possible, mais encore très avantageux d'utiliser du sulfite d'éthylène diamine comme agent de durcissement latent pour des résines aminoplastes destinées à l'imprégnation de supports absorbants tels que ceux indiqués ci-dessus, à la condition de choisir un rapport molaire anhydride sulfureux-éthylène diamine tel que le pH de solution soit au moins égal à 6.

La présente invention a donc d'abord pour objet un agent de durcissement latent pour des résines aminoplastes, notamment pour des résines mélamine-formaldéhyde, destinées à être appliquées en tant que résines d'imprégnation, ledit agent consistant en une solution aqueuse de sulfite d'éthylène diamine, obtenue par réaction en milieu aqueux d'anhydride sulfureux et d'éthylène diamine, le rapport molaire anhydride sulfureux : éthylène diamine étant tel que le pH de la solution soit supérieur ou égal à 6 et inférieur ou égal à 8.

Le rapport molaire anhydride sulfureux : éthylène diamine est notamment compris entre 1,25:1 et 1:1,5.

L'agent de durcissement se présente notamment sous la forme d'une solution aqueuse dont la concentration peut aller jusqu'aux limites de solubilité du sel (voir Exemples). Le sulfite de diamine peut être préparé soit par addition d'amine dans une solution aqueuse de sulfite, soit par barbotage de SO₂ dans une solution aqueuse de diamine ; en raison de l'exothermicité de la réaction, il est nécessaire de refroidir.

L'invention porte également sur des mélanges d'imprégnation à base de résines aminoplastes classiques ; pour ce type d'applications, ces mélanges comprennent un précondensat de résine aminoplaste et un agent de durcissement latent tel que défini ci-dessus, et, le cas échéant, des adjuvants usuels, tels qu'agents démoulants, agents mouillants, solvants, plastifiants, charges, etc.

L'agent de durcissement latent selon l'invention est généralement ajouté dans une quantité de 0,1 à 10% en poids sec par rapport à la quantité de matières solides de précondensat de résine aminoplaste.

Les résines d'imprégnation mélamine-formaldéhyde présentent généralement un rapport molaire de 1 : 1 à 1 : 3 de la mélamine au formaldéhyde.

Pour mieux illustrer l'objet de la présente invention, on va en décrire ci-après plusieurs exemples de réalisation, non limitatifs.

### Exemples Comparatifs 1 et 2 et Exemples 3 à 5 de l'invention :

### Préparation de solutions de sulfite d'éthylène diamine à différents pH

De l'anhydride sulfureux (SO₂) est ajouté dans une solution aqueuse à 20% en poids d'éthylène diamine. Des échantillons sont prélevés pour les valeurs de pH de respectivement 4 ; 5 ; 6 ; 6,5 ; et 7 (Exemples respectivement 1 (Comparatif) ; 2 (Comparatif) ; et 3 à 5).

Chaque échantillon a été analysé d'une part, par dosage de l'azote par la méthode de KJELDAHL et, d'autre part, par titrimétrie par utilisation d'une solution d'éthylène diamine comme agent de titration.

Dans le Tableau 1 ci-après, sont indiquées les concentrations molaires pour 100 g de solution, d'une part du SO₂ introduit, d'autre part, de l'éthylène diamine.

**TABLEAU 1**

| Echantillon | | Concentrations molaires de SO₂ et d'éthylène diamine | | |
|---|---|---|---|---|
| | | calculées à partir des quantités introduites | résultant de l'analyse | |
| | | | par titrimétrie | à partir du taux d'azote |
| Ex. Comp.1 (pH = 4) | SO₂ | 0,46 | 0,456 | |
| | E.D.* | 0,23 | 0,23 | 0,248 |
| Ex. Comp.2 (pH = 5) | SO₂ | | 0,41 | |
| | E.D.* | | 0,238 | 0,246 |
| Ex. 3 (pH = 6) | SO₂ | | 0,332 | |
| | E.D.* | | 0,26 | 0,267 |
| Ex. 4 (pH = 6,5) | SO₂ | | 0,306 | |
| | E.D.* | | 0,279 | 0,27 |
| Ex. 5 (pH = 7) | SO₂ | 0,275 | 0,297 | |
| | E.D.* | 0,275 | 0,297 | 0,273 |

| | | | | |
|---|---|---|---|---|
| * E.D. = Ethylène diamine | | | | |

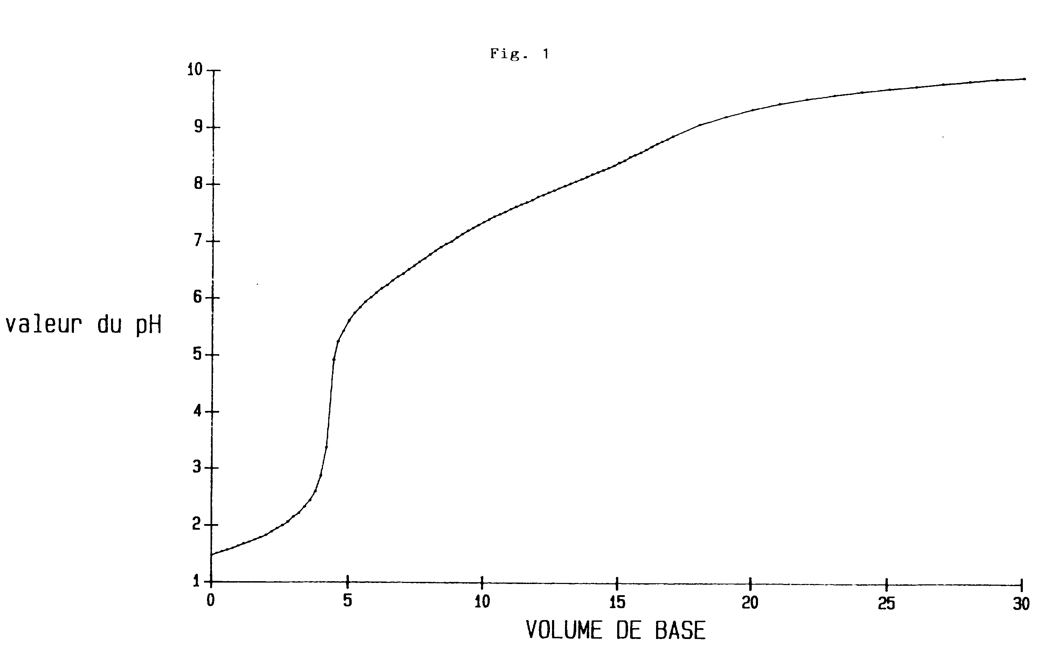

La courbe pH métrique apparaissant sur la Figure 1 concernant l'addition d'éthylène diamine dans une solution aqueuse d'acide sulfureux, fait apparaître trois points d'équivalence : pH 4, pH 7, pH 8,8.

### Exemple d'essai 6 : Mesure des temps de trouble

On a mesuré, pour différents taux de durcisseur, les temps de trouble à 100°C d'un durcisseur connu A, à savoir le paratoluène sulfonate d'ammonium, et de ceux des Exemples Comparatifs 1 et 2 et des Exemples 3 à 5 de l'invention. Le protocole opératoire était le suivant :

10 g de résine mélamine-formaldéhyde (rapport molaire de la mélamine au formaldéhyde : 1 : 1,56), ayant une teneur en matières solides de 60%, et x g de durcisseur dilué à 10% - ce qui signifie que les titres sont ceux indiqués dans le Tableau 1 et que ces durcisseurs sont dilués par 9 x parties d'eau - sont placés dans un tube à essai, lequel est plongé dans un bain à 100°C. Le temps de trouble mesuré, exprimé en secondes, correspond non pas à l'apparition du trouble, mais au moment où la résine est totalement trouble. Les résultats sont décrits dans le Tableau 2. Le temps de trouble est un critère d'évaluation de la réactivité du durcisseur.

**TABLEAU 2**

| x (g) | Durcisseur | | | | | |
|---|---|---|---|---|---|---|
| | A | Ex. Comp 1 | Ex. Comp 2 | Ex. 3 | Ex. 4 | Ex. 5 |
| 1,5 | 160 | 130 | 132 | 148 | 150 | 155 |
| 1 | 196 | 138 | 147 | 167 | 176 | 178 |
| 0,5 | 300 | 202 | 202 | 229 | 249 | 258 |
| 0,25 | 560 | 295 | 330 | 366 | 425 | 437 |

### Exemple d'essai 7 : Mesure de la solubilité

### Protocole d'essai :

On introduit 0,75 g de durcisseur décrit dans le Tableau 1 dans 100 g de solution de résine définie dans l'Exemple 6. On agite à température ambiante pendant 5 minutes, puis on observe la limpidité du milieu réactionnel.

Par ailleurs, parmi les cinq durcisseurs préparés ci-dessus, ceux à pH 4 et à pH 5 ont été écartés pour des raisons d'insolubilité et de mauvaise dispersion. Dès l'introduction de ces durcisseurs dans la résine, il apparaît un trouble important. En revanche, les durcisseurs préparés à pH 6, à pH 6,5 et à pH 7 ne présentent pas cette caractéristique : ils sont compatibles à 100% avec la résine.

### Exemple d'application :

Le mélange d'imprégnation est préparé à partir des ingrédients suivants :
- Résine M-502 commercialisée par la Société ELF ATOCHEM (extrait sec : 60%) 100 parties en poids en solution
- Agent démoulant 0,25 partie en poids
- Agent mouillant 0,25 partie en poids
- Glycol 1 partie en poids
- Solution de durcisseur : quantité définie selon le durcisseur décrit dans le Tableau 2 pour obtenir un temps de trouble de 250 secondes.

On met en oeuvre un papier présentant un grammage blanc 80 g/m² qu'on imprègne avec la solution décrite ci-dessus, puis on sèche en étuve à 140°C, de façon à obtenir un taux de résine sèche par rapport au papier sec compris entre 110 et 140% et une humidité résiduelle comprise entre 5,5 et 6,8%.

Ces papiers ainsi préparés sont utilisés pour le surfaçage de panneaux particules dans une presse munie de plateaux chromés :
- pression : 2,5 MPa
- durée : 50 secondes
- température : 190°C

La qualité des panneaux est évaluée à l'aide des tests classiques suivants :

### 1 - Durcissement

A l'aide d'une coupe de Petri, on applique une solution acide H₂SO₄ à 5% en poids contenant 0,1% en poids de Rhodamine B pendant 2 heures sur la surface. On sèche avec un papier absorbant, on note la coloration suivant une échelle allant de 0 à 5 (0 indiquant : pas d'attaque, et 5 : un durcissement trop important).

### 2 - Fermeture de faces

On frotte la surface à l'aide d'un chiffon doux et du cirage noir. On enlève l'excédent d'abord à l'aide d'un chiffon propre et un solvant. On observe ensuite à l'oeil nu la surface pour évaluer si le cirage a été complètement enlevé. On note de 0 à 5 (pas de cirage : note 0).

### 3 - Résistance à la fissuration

On découpe un morceau du panneau de 15 x 15 cm. On ponce les bords à l'aide de papier de verre. On place ensuite l'échantillon dans une étuve à 80°C pendant 24 heures. On laisse refroidir. On note et compte éventuellement le nombre de fissures. La présence de fissures est évaluée suivant une échelle 0 à 5 (note 0 : pas de fissure)

**TABLEAU 3**

| Durcisseur | A | Exemple 3 | Exemple 5 |
|---|---|---|---|
| Durcissement | 4 | 2 | 2 |
| Fermeture | 3 | 1 - 2 | 0 - 1 |
| Fissuration | 1 | 0 | 0 |

## Revendications

1. Utilisation comme agent de durcissement latent pour des résines aminoplastes, notamment pour des résines mélamine-formaldéhyde, destinées à être appliquées en tant que résines d'imprégnation, d'une solution aqueuse de sulfite d'éthylène diamine, obtenue par réaction en milieu aqueux, d'anhydride sulfureux et d'éthylène diamine, le rapport molaire anhydride sulfureux : éthylène diamine étant tel que le pH de ladite solution soit supérieur ou égal à 6 et inférieur ou égal à 8.

2. Utilisation selon la revendication 1, caractérisée par le fait que le rapport molaire anhydride sulfureux : éthylène diamine est compris entre 1,25 : 1 et 1 : 1,5.

3. Utilisation selon l'une des revendications 1 et 2, caractérisée par le fait que l'agent de durcissement latent se présente sous la forme d'une solution aqueuse dont la concentration peut aller jusqu'aux limites de solubilité du sel.

4. Mélange d'imprégnation à base de résine aminoplaste thermodurcissable, comprenant un précondensat de résine aminoplaste et un agent de durcissement latent, et, le cas échéant, des adjuvants usuels tels qu'agents démoulants, agents mouillants, solvant, plastifiants et charges, ledit agent de durcissement latent consistant en une solution aqueuse de sulfite d'éthylène diamine, obtenue par réaction en milieu aqueux, d'anhydride sulfureux et d'éthylène diamine, le rapport molaire anhydride sulfureux : éthylène diamine étant tel que le pH de ladite solution soit supérieur ou égal à 6 et inférieur ou égal à 8.

5. Mélange d'imprégnation selon la revendication 4, caractérisé par le fait que le rapport molaire anhydride sulfureux : éthylène diamine pour l'agent de durcissement latent est compris entre 1,25 : 1 et 1 : 1,5.

6. Mélange d'imprégnation selon l'une des revendications 4 et 5, caractérisé par le fait que l'agent de durcissement latent se présente sous la forme d'une solution aqueuse dont la concentration peut aller jusqu'aux limites de solubilité du sel.

7. Mélange d'imprégnation selon l'une des revendications 4 à 6, caractérisé par le fait que l'agent de durcissement latent est ajouté dans une quantité de 0,1 à 10% en poids sec par rapport à la quantité de matières solides de précondensat de résine aminoplaste.

8. Mélange d'imprégnation selon l'une des revendications 4 à 7, caractérisé par le fait que la résine d'imprégnation mélamine/formaldéhyde est une résine qui a un rapport molaire de la mélamine au formaldéhyde de 1 : 1 à 1 : 3.

## Patentansprüche

1. Verwendung als latenter Härter für Aminoplastharze, insbesondere für Melamin-Formaldehyd-Harze, die zur Anwendung als Imprägnierharze vorgesehen sind, einer wäßrigen Ethylendiaminsulfit-Lösung, die durch Umsetzung von Schwefeldioxid mit Ethylendiamin in wäßrigem Medium hergestellt wird, wobei das Molverhältnis Schwefeldioxid : Ethylendiamin einen solchen Wert aufweist, daß der pH-Wert dieser Lösung gleich oder größer als 6 und kleiner als oder gleich 8 ist.

2. Verwendung nach Anspruch 1, dadurch gekennzeichnet, daß das Molverhältnis Schwefeldioxid : Ethylendiamin im Bereich von 1,25 : 1 bis 1 : 1,5 liegt.

3. Verwendung nach einem der Ansprüche 1 und 2, dadurch gekennzeichnet, daß der Härter in Form einer wäßrigen Lösung vorliegt, deren Konzentration bis an die Löslichkeitsgrenzen des Salzes reichen kann.

4. Imprägniergemisch auf der Basis eines heißhärtenden Aminoplastharzes, das ein Aminoplastharz-Vorkondensat und einen latenten Härter und gegebenenfalls herkömmliche Hilfsstoffe, wie z.B. Entformungsmittel, Netzmittel, Lösungsmittel, Weichmacher und Füllstoffe, enthält, wobei der latente Härter aus einer wäßrigen Ethylendiaminsulfit-Lösung besteht, die durch Umsetzung von Schwefeldioxid mit Ethylendiamin in wäßrigem Medium hergestellt wird, wobei das Molverhältnis Schwefeldioxid : Ethylendiamin einen solchen Wert aufweist, daß der pH-Wert der Lösung gleich oder größer als 6 und kleiner als oder gleich 8 ist.

5. Imprägniergemisch nach Anspruch 4, dadurch gekennzeichnet, daß das Molverhältnis Schwefeldioxid : Ethylendiamin für den latenten Härter im Bereich von 1,25 : 1 bis 1 : 1,5 liegt.

6. Imprägniergemisch nach einem der Ansprüche 4 und 5, dadurch gekennzeichnet, daß der latente Härter in Form einer wäßrigen Lösung vorliegt, deren Konzentration bis an die Löslichkeitgrenzen des Salzes reichen kann.

7. Imprägniergemisch nach einem der Ansprüche 4 bis 6, dadurch gekennzeichnet, daß der latente Härter in einer Menge von 0,1 bis 10 Gew.-%, bezogen auf das Trockengewicht und bezogen auf die Menge der Festsubstanzen des Aminoplastharz-Vorkondensats, zugegeben wird.

8. Imprägniergemisch nach einem der Ansprüche 4 bis 7, dadurch gekennzeichnet, daß das Melamin/Formaldehyd-Imprägnierharz ein Harz ist, das ein Molverhältnis Melamin zu Formaldehyd von 1 : 1 bis 1 : 3 aufweist.

## Claims

1. Use, as latent curing agent for aminoplast resins, in particular for melamine-formaldehyde resins, intended to be applied as impregnation resins, of an aqueous ethylenediamine sulphite solution obtained by reaction of sulphur dioxide and ethylenediamine in aqueous medium, the sulphur dioxide:ethylenediamine molar ratio being such that the pH of the said solution is greater than or equal to 6 and less than or equal to 8.

2. Use according to Claim 1, characterized in that the sulphur dioxide:ethylenediamine molar ratio is between 1.25:1 and 1:1.5.

3. Use according to either of Claims 1 and 2, characterized in that the latent curing agent is provided in the form of an aqueous solution with a concentration which can range up to the solubility limits of the salt.

4. Impregnation blend based on thermosetting aminoplast resin comprising an aminoplast resin precondensate and a latent curing agent and, if appropriate, conventional adjuvants, such as mould-release agents, wetting agents, solvents, plasticizers and fillers, the said latent curing agent consisting of an aqueous ethylenediamine sulphite solution obtained by reaction of sulphur dioxide and ethylenediamine in aqueous medium, the sulphur dioxide:ethylenediamine molar ratio being such that the pH of the said solution is greater than or equal to 6 and less than or equal to 8.

5. Impregnation blend according to Claim 4, characterized in that the sulphur dioxide:ethylenediamine molar ratio for the latent curing agent is between 1.25:1 and 1:1.5.

6. Impregnation blend according to either of Claims 4 and 5, characterized in that the latent curing agent is provided in the form of an aqueous solution with a concentration which can range up to the solubility limits of the salt.

7. Impregnation blend according to one of Claims 4 to 6, characterized in that the latent curing agent is added in an amount of 0.1 to 10% by dry weight with respect to the amount of aminoplast resin precondensate solid matter.

8. Impregnation blend according to one of Claims 4 to 7, characterized in that the melamine-formaldehyde impregnation resin is a resin which has a molar ratio of the melamine to the formaldehyde of 1:1 to 1:3.
